## Europäisches Patentamt

**European Patent Office**

**Office européen des brevets**

(11) Publication number: **0 182 584**

**B1**

(12) **EUROPEAN PATENT SPECIFICATION**

(45) Date of publication of patent specification: **11.10.89**

(51) Int. Cl.⁴: **G 01 G 19/32**

(21) Application number: **85308221.2**

(22) Date of filing: **12.11.85**

(54) Automatic combinatorial weighing apparatus.

(30) Priority: **12.11.84 JP 170329/84**
**12.11.84 JP 170330/84**

(43) Date of publication of application:
**28.05.86 Bulletin 86/22**

(45) Publication of the grant of the patent:
**11.10.89 Bulletin 89/41**

(84) Designated Contracting States:
**DE FR GB**

(56) References cited:
**EP-A-0 052 498**
**EP-A-0 074 283**
**EP-A-0 101 313**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Bochi, Hiroshi**
**818, Jorakuji Azuchi-cho**
**Gamou-gun Shiga (JP)**
Inventor: **Ueda, Kenji**
**1-1, Oheminamifukunishi-cho 2-chome**
**Nishigyo-ku Kyoto-shi (JP)**
Inventor: **Konishi, Satoshi**
**1922-284, Niji-cho**
**Kusatsu-shi Shiga (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to an automatic combinatorial weighing apparatus.

An automatic combinatorial weighing apparatus can operate by supplying articles to be weighed to a plurality of weighing machines, effecting combinatorial arithmetic operations on weight values provided by the weighing machines, selecting an optimum weight combination having a total weight equal or closest to a target weight value, and discharging the articles from only those weighing machines which give that optimum weight combination, thereby to produce a batch of articles having a total weight equal or closest to the target weight.

One such automatic combinatorial weighing apparatus, the main features of which are disclosed in EP-A-0101313, will be described with reference to Fig. 21 of the accompanying drawings. This weighing apparatus, generally denoted at reference numeral 1, has a frame 2 and a subframe 3 disposed above the frame 2 and supported thereon by a plurality of legs 2a. A distributing or dispersing table 4 is mounted centrally on the subframe 3 by an electromagnetic three-dimensional vibrator 5. The weighing apparatus 1 includes a plurality (fourteen, for example) of radial troughs 6 disposed around the distributing table 4 and mounted on the subframe 3 by respective electromagnetic vibrators 7. Respective pool hoppers 8 are positioned outside and below the radial troughs 6, and respective weighing hoppers 10 are disposed below the pool hoppers 8, the weighing hoppers 10 being supported by respective weighing devices 9. The pool hoppers 8 and the weighing hoppers 10 have outlet gates which can be opened and closed by link mechanisms 26 and 16 through push rods 14 of opening/closing devices 13 mounted on the lower surface of the subframe 3. The opening/closing devices 13 can be actuated through a gear transmission device 12a by a motor 12 mounted centrally on the lower surface of the subframe 3.

A collection chute assembly 11 is mounted on the frame 2 below the weighing hoppers 10 for collecting the articles discharged from the weighing hoppers 10 and discharging the collected articles to a packaging device (not shown).

The apparatus thus constructed operates as follows. Articles to be weighed are dropped from an article feeder (not shown) onto the distributing table 4 and distributed thereby into the radial troughs 6, from which the articles are supplied to the respective pool hoppers 8. The articles are then fed from the pool hoppers 8 into the respective weighing hoppers 10 and weighed therein by the respective weighing devices 9. Weight signals from the weighing devices 9 are applied to an arithmetic control unit (not shown), which effects a combinatorial arithmetic operation based on the weight values represented by the applied weight signals. The arithmetic control unit then selects an optimum weight combination having a combined weight equal or closest to a target weight, and controls the opening/closing devices 13 to open the gates of those weighing hoppers 10 which contain the articles giving such an optimum weight combination, thereby discharging the articles from these weighing hoppers 10. The weighing hoppers 10 from which the articles have been discharged are then supplied with fresh articles from the corresponding pool hoppers 8, which are in turn supplied with articles from the corresponding radial troughs 6.

The arithmetic control unit comprises a microcomputer for effecting such combinatorial arithmetic operations to enable the automatic combinatorial weighing apparatus 1 to weigh articles at high speed.

To assist the automatic combinatorial weighing apparatus 1 in operating at high speed, the pool hoppers 8 and the weighing hoppers 10 are arranged in circular arrays of small diameter around the central vertical axis of the apparatus 1, so that the apparatus 1 is of reasonably small size, one aim being to minimize the path length and maximize the speed of passage of articles through the apparatus. Bearing this aim in mind, the vertical dimension of the apparatus 1 is also kept as small as is reasonably practicable.

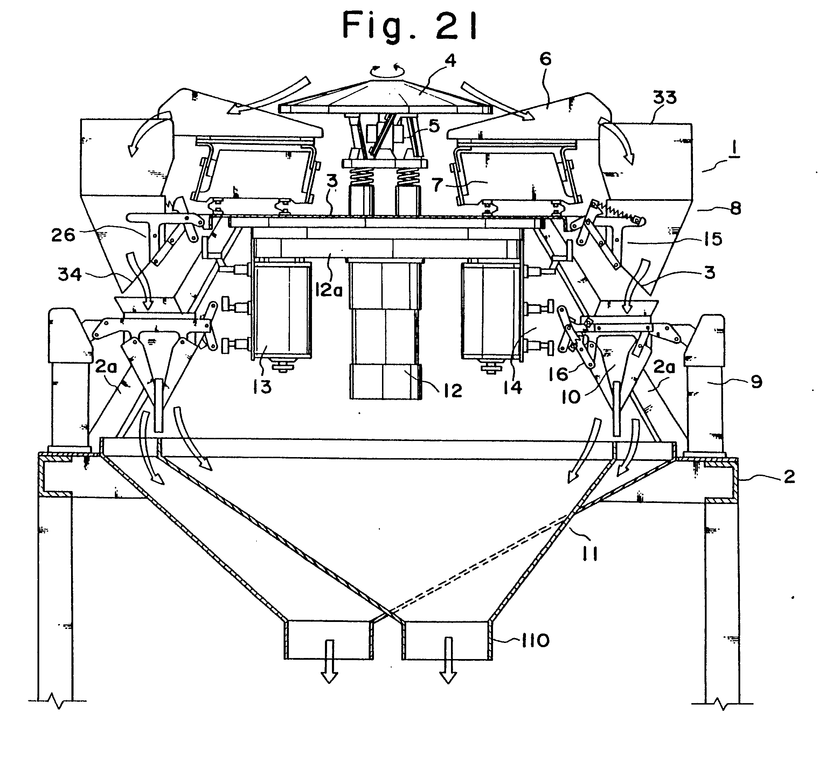

In the apparatus of Fig. 21, the collection chute assembly 11 for delivering the articles fed from the weighing hoppers 10 through timing hoppers 110 to the packaging device is the largest main component. To accommodate a certain number of circularly arranged hoppers 8 and 10 of a certain size, the diameter of the collection chute assembly 11 cannot be reduced beyond a certain limit. In addition, if the collection chute assembly 11 were excessively reduced in height, the article slide surfaces therein would be of too small a gradient and impose a large resistance to the sliding movement of the articles thereon.

Each of the weighing hoppers 10 has alternatively openable gates, respectively openable outwardly and inwardly as shown in Fig. 21. The collection chute assembly 11 comprises an inner collection chute, for receiving articles through the inwardly opening gates of the weighing hoppers 10, and an outer collection chute for receiving articles through the outwardly opening gates of the weighing hoppers 10. The gates of the weighing hoppers 10 are opened alternately inwardly and outwardly to supply articles to the double collection chute assembly 11 for higher-speed operation.

Ideally, for achieving higher-speed operation, the articles discharged from the weighing hoppers 10 should pass along straight paths, of minimal resistance to their sliding movement, through the inner and outer collection chutes.

The inner and outer collection chutes are coaxially arranged at their inlet ends but have laterally separate respective outlets, at which timing hoppers 110 are provided. It will accordingly be appreciated that in each chute the path of the articles sliding down the right-hand side of the chute as seen in Figure 21 is different in length and shape from that of articles sliding down the left-hand side of the chute.

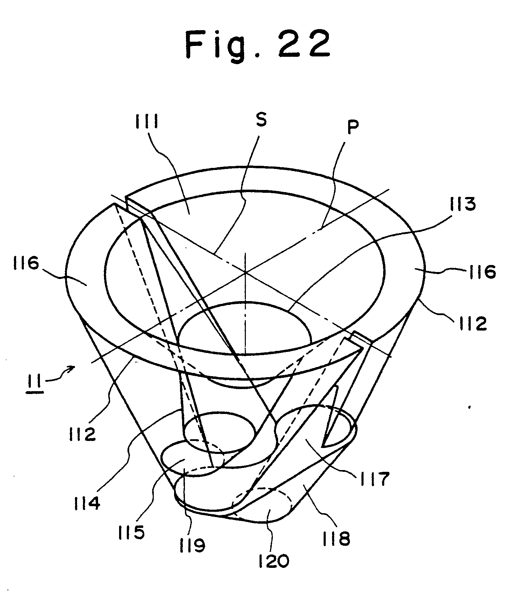

There has been developed a double collection chute assembly as shown in Fig. 22 of the accompanying drawings. The double collection chute assembly, generally designated at 11 in Fig. 22, has an inner collection chute 111, in the form of a truncated cone, and a pair of outer collection chutes 112, each in the form of a vertically bisected cone, the outer collection chutes 112 being symmetrical with respect to a plane S lying through the center of the inner collection chute 111. The inner collection chute 111 has an outlet 113 offset or displaced from the central axis and connected to inclined off-center discharge chutes 114 and 115. The outer collection chutes 112 and the inner collection chute 111 define a pair of discharge clearances 116 therebetween, which are connected to outlets 117 joined to a downwardly tapered discharge chute 118 having an outlet 120. The discharge chute 115 has an outlet 119 which is disposed as closely to the outlet 120 as possible.

In the double collection chute assembly 11, it is intended that articles should fall quickly down the inner and outer collection chutes 111 and 112, to reach the outlets 119 and 120 at the same speed and in the same period of time. However, the articles tend to hit each other, and be caused to jump and flow in meandering or roundabout paths, because of the curvature of the slanted surfaces of the chutes 111 and 112. In particular, articles discharged through the clearances 116 drop down into the discharge chute 118, leading from the outlets 117 to the outlet 120, and are caused to flow in curved paths against the inner surface of the discharge chute 118, with the result that the articles tend to flow in a somewhat turbulent manner in the vicinity of the outlet 120. Therefore, the articles falling down the discharge chute 188 are likely to flow down at irregular speeds and in uneven times. In discharge chutes 114 and 115, leading from the inner collection chute 111, the articles fall more smoothly.

The outer collection chutes 112 are not symmetrical with respect to a plane P normal to the plane S. Therefore, the articles falling down opposite sides of the plane P follow different paths at different speeds, and hence reach the outlet 120 different periods of time.

In contrast, EP-A-0101313 discloses an arrangement having two outer collection chutes which are together symmetrical about two mutually perpendicular planes, but having two inner collection chutes neither of which is axially symmetrical.

According to the present invention, there is provided an automatic combinatorial weighing apparatus, for measuring out successive batches of articles, having a collection chute assembly, disposed below an array of weighing hoppers, for receiving articles from those hoppers, which assembly comprises a first collection chute, which narrows in cross-section in the downward direction to an outlet thereof, disposed between two outer collection chutes having respective outlets at lower ends thereof, which outer chutes are together substantially symmetrical about two mutually perpendicular planes; the apparatus being such that articles are discharged from selected weighing hoppers into just the said first collection chute in one weighing cycle, into just the outer collection chutes in the next weighing cycle, and so on alternately in successive cycles;

characterised in that the said first collection chute is substantially axially symmetrical; and in that a first timing hopper is disposed at the outlet of the said first collection chute, for receiving articles therefrom, and in that two further timing hoppers are disposed respectively at the outlets of the two outer collection chutes, for receiving articles respectively from those chutes; there being a first discharge chute having an inlet arranged for receiving articles from the first timing hopper, and a second discharge chute having first and second inlet portions arranged for receiving articles respectively from the two further timing hoppers and having wall portions defining first and second discharge paths which differ in length from one another and lead respectively from the said first and second inlet portions to a common outlet of the second discharge chute; and the said two further timing hoppers being individually controllable to discharge the quantities of articles collected respectively therein into the second discharge chute at different respective times such that those quantities arrive at the said common outlet substantially simultaneously with one another.

Reference will now be made, by way of example, to the accompanying diagrammatic drawings in which:-

Fig. 1 is a perspective view of half of a collection chute assembly for an embodiment of the present invention;

Fig. 2 is a perspective view of lower parts of the assembly of Fig. 1;

Fig. 3 is a plan view of part of one component of the assembly of Fig. 1;

Fig. 4 is a plan view of part of a second component of the assembly of Fig. 1;

Fig. 5 is a plan view of part of a third component of the assembly of Fig. 1;

Fig. 6 is a plan view of part of a fourth component of the assembly of Fig. 1;

Fig. 7 is a side elevational view of part of the said one component;

Fig. 8 is a side elevational view of part of the said second component;

Fig. 9 is a side elevational view of part of the said fourth component;

Fig. 10 is a side elevational view of part of the said third component;

Fig. 11 is a plan view of a quarter of the collection chute assembly of Fig. 1;

Fig. 12 is a side elevational view corresponding to Fig. 11;

Fig. 13 is front elevational view corresponding to Fig. 11;

Figs. 14 and 15 illustrate schematically how timing hoppers are arranged, in the embodiment concerned, in relation to the assembly as shown in Figs. 13 and 12 respectively;

Fig. 16 is a plan view of discharge chutes of the said embodiment;

Fig. 17 is a front elevational view of the discharge chutes of Fig. 16;

Fig. 18 is a side elevational view of a pool hopper employed in an embodiment of the present invention;

Fig. 19 is an enlarged fragmentary cross-sectional view of an encircled area X in Fig. 18;

Fig. 20 is an enlarged fragmentary cross-sectional view, corresponding to that of Fig. 19, relating to another embodiment of the present invention;

Fig. 21 is a side elevational view of an automatic combinatorial weighing apparatus not embodying the present invention; and

Fig. 22 is a schematic perspective view of a double collection chute assembly for a weighing apparatus not embodying the present invention.

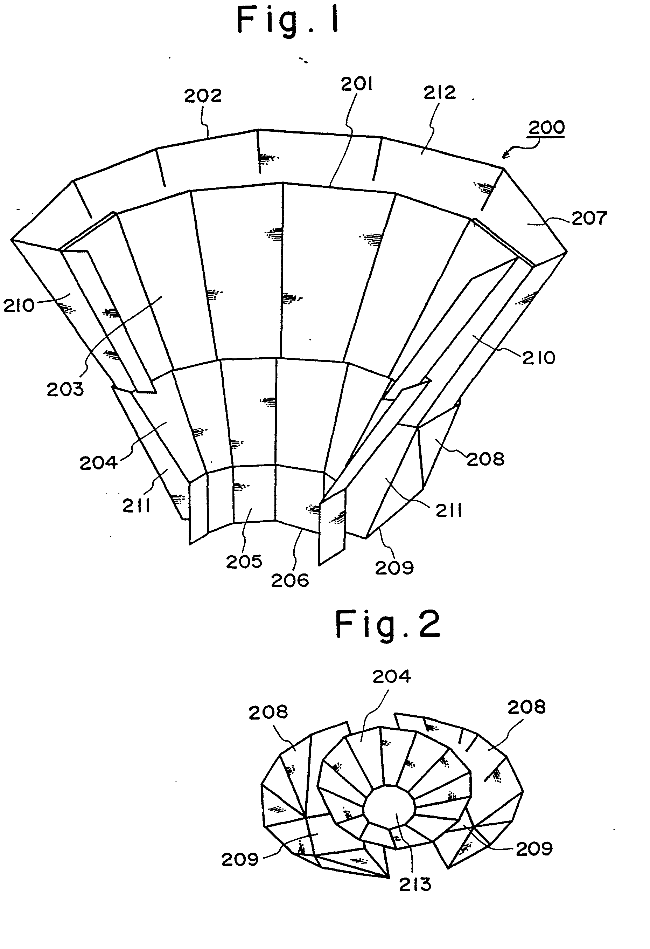

Fig. 1 shows one half of a collection chute assembly 200 designed to replace the collection chute assembly 11 in the automatic combinatorial weighing apparatus of Fig. 21, having fourteen weighing hoppers. The collection chute assembly 200 is composed of an inner collection chute 201 which narrows in cross-section in the downward direction, and two outer collection chutes each of which also narrows in cross-section in the downward direction. The inner chute 201 is disposed between the two outer chutes 202, only one of which is seen in Fig. 1.

The inner collection chute 201 comprises an upper inner collection chute part 203, a lower inner collection chute part 204, and an outlet chute part 205 in the form of a tube of uniform 14-sided polygonal cross-section, the outlet end of which is indicated at 206. Each outer collection chute 202 has an upper outer collection chute part 207 and a lower outer collection chute part 208 having a square outlet end 209.

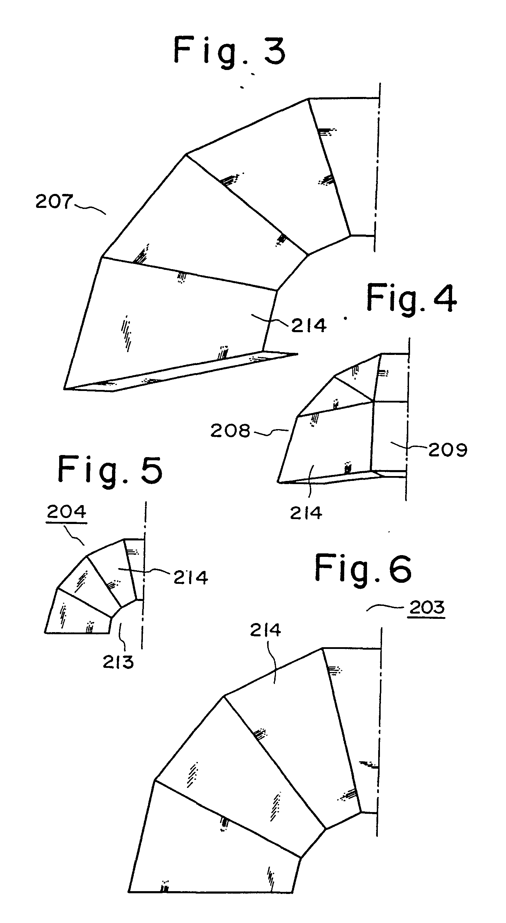

Each of the collection chute parts 203, 204, 207 and 208 is made up of a number of flat panels 214 (Figs. 3 to 10) joined along bent edges so that adjacent panels are inclined to one another. In correspondence with the number of weighing hoppers employed, each of the inner chute parts 203 to 205 comprises fourteen such panels, and each of the outer chute parts 207 and 208 comprises seven such panels. The outer collection chutes 202 are joined to the inner collection chute 201 by upper and lower elongate flat panels 210 and 211 which extend in substantially vertical planes and maintain a clearance 212 between the inner collection chute 201 and each outer collection chute 202.

Articles discharged from the inwardly opening gates of the weighing hoppers 10 (Fig. 21) fall through the inner collection chute 201 to its outlet 206. Articles discharged from the outwardly opening gates of the weighing hoppers 10 are collected by the outer collection chutes 202, i.e. they fall through the clearances 212 between the inner collection chute 201 and the respective outer collection chutes 202, and are guided therein to the square outlets 209. The respective discharge clearances 212 of the two outer collection chutes 202 are separated from each other by the elongate panels 210 and 211. The inner and outer collection chutes 201 and 202 together form a structure that is symmetrical about each of two mutually perpendicular planes extending diametrically across the collection chute assembly 200 and intersecting in a central axis of that assembly.

The lower inner collection chute part 204 and the two lower outer collection chute parts 208 are shown in perspective in Fig. 2. The part 204 and its outlet 213 are axially symmetrical. It will be appreciated that the lower outer collection chute parts 208, having the outlets 209, are connected respectively to the upper outer collection chute parts 207 (not shown in Fig. 2). The outlet 213 of the part 204 is connected to the outlet chute part 205 (not shown in Fig. 2).

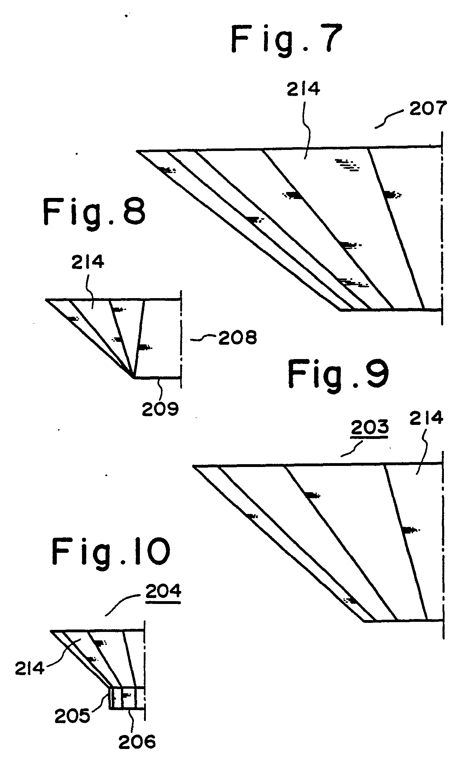

Figs. 3 and 4 show respectively, in plan, a half of one of the upper outer collection chute parts 207 and a half of one of the lower outer collection chute parts 208. Figs. 5 and 6 illustrates respectively, in plan, a quarter of the lower inner collection chute part 204 and a quarter of the upper inner collection chute part 203. Figs. 7 and 8 show respectively, in side elevation, the portions of the upper and lower outer collection chute parts 207 and 208 that are shown in Figs. 3 and 4. Figs. 9 and 10 show respectively, in side elevation, the portions of the upper inner collection chute part 203 and the lower inner collection chute part 204 that are shown in Figs. 6 and 5.

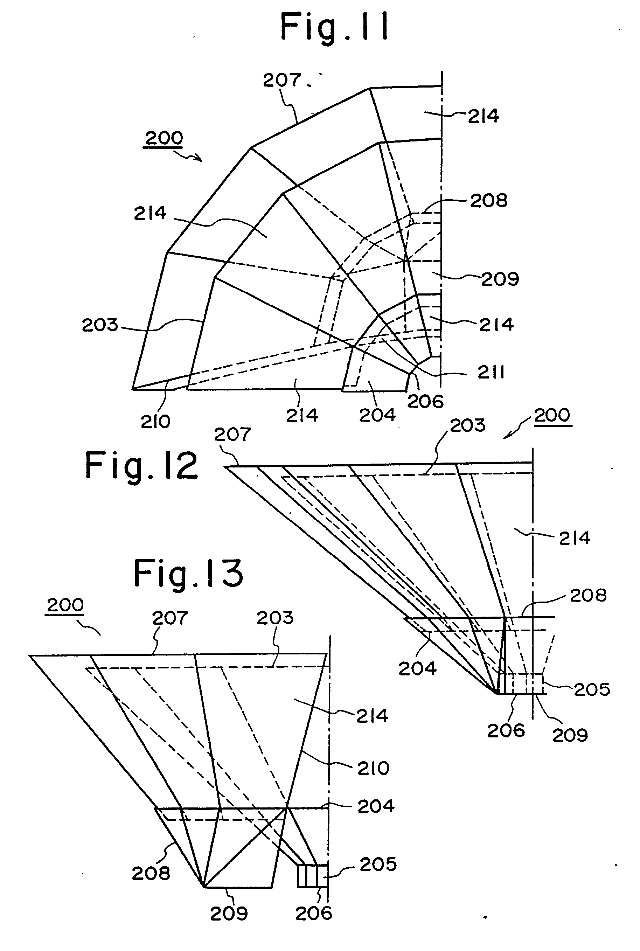

Fig. 11 shows, in plan, a quarter of the assembly 200, including the upper and lower outer collection chute parts 207 and 208 and the upper and lower inner collection chute parts 203 and 204. Fig. 12 shows a side elevation corresponding to Fig. 11 and Fig. 13 shows a front elevation corresponding to Fig. 11.

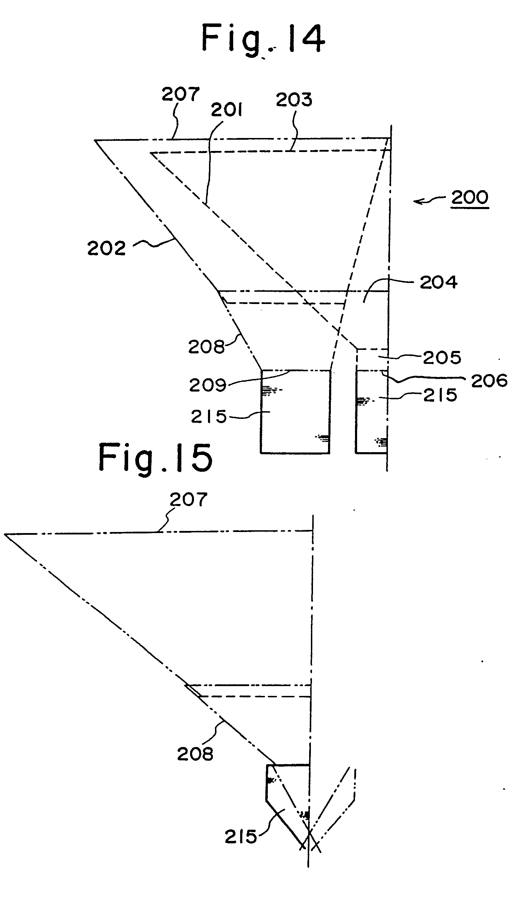

As can be appreciated from Figs. 14 and 15, respective timing hoppers 215 are connected to the outlets 209 of the lower outer collection chute parts 208 and to the outlet 206 of the outlet chute part 205 of the inner collection chute 201. Thus an individual timing hopper 215 is coupled to each of the outer collection chutes 202, and a third timing hopper 215 is coupled to the inner collection chute 201. The timing hoppers 215 are coupled to mechanisms (not shown) actuated by pneumatic cylinders for opening and closing the timing hoppers 215.

Article delivery paths through the inner collection chute 201 are similar to one another because of the axial symmetry of the inner chute. As regards the outer collection chutes, the aforementioned symmetry of the assembly about two mutually perpendicular diametrical planes ensures that for each article delivery path through any one of the four segments into which the structure constituted by the outer chutes is divided by those two planes there is a similar article delivery path through each of the other three segments of the outer collection chute structure.

In each of the inner and outer collection chutes 201 and 202 the deliver paths, along which the articles discharged from the weighing hoppers flow, pass over the flat panels 214. Since the laterally adjacent flat panels 214 are joined at angles, to form valleys therebetween, the articles flowing down the delivery paths tend to be constrained to pass down those valleys, thereby being guided down paths of minimum practicable length. Thus the use of the flat panels 214, joined at angles to one another, serves to inhibit articles from flowing in roundabout paths.

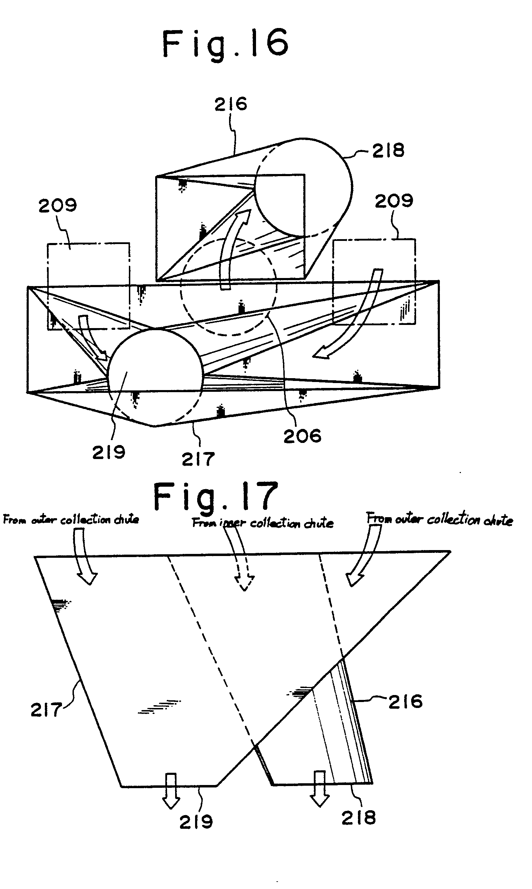

As illustrated in Figs. 16 and 17, a first discharge chute 216 has an inlet connected to the timing hopper 215 of the inner collection chute 201 and extends downwardly to an outlet 218 that is offset, or displaced, to one side of the dividing plane between the two outer collection chutes 202 and is connected to a nozzle of a packaging machine (not shown). A second discharge chute 217 has first and second inlet portions arranged for receiving articles respectively from the two outer collection chutes 202. The chute 217 extends downwardly to a common outlet 219 that is offset to the other side of the said dividing plane and is connected to another nozzle of the packaging machine. The first discharge chute outlet 218 and the second discharge chute outlet 219 are positioned symmetrically with respect to one another about the central axis of the collection chute assembly 200. Each of the discharge chutes 216 and 217 is composed of a plurality of angularly joined flat panels.

As can be appreciated from Figs. 16 and 17, the respective paths that extend from the two outer timing hoppers 215 for delivering articles respectively from the two outer collection chutes 202, to the common outlet 219 of the discharge chute 217 are differently slanted. However, the respective opening times of these timing hoppers 215 can be individually controlled electrically so as to ensure that the respective times of arrival, at the common outlet 219, of articles entering the discharge chute 217 by way of the said first and second inlet portions respectively are substantially the same. Such simultaneous arrival of articles at the outlet 219 ensures that a batch of articles received from the outer collection chutes 202 passes completely through the outlet 219 to the packaging machine within a desirably short time interval, so that packaging process is not substantially delayed.

The outlet discharge chute 216, although not vertical, is such that no significant differences in times of arrival are imposed thereby on articles passing therethrough to its outlet 218.

In use of this embodiment of the invention, articles received from an upper article feeder are fed by the disturbing table 4 (Fig. 21) via the radial troughs 6 and the pool hoppers 8 into the weighing hoppers 10, in which the articles are weighed by the weighing devices 9. Weight signals from the weighing devices 9 are applied to an arithmetic control unit comprising a microcomputer which selects the weighing hoppers 10 that give a weight combination equal or closest to a target weight. In alternate weighing cycles respectively, the arithmetic control unit then opens alternately the inner and outer gates of the selected weighing hoppers 10 to discharge the articles into the inner and outer collection chutes 201 and 202. The articles discharged into the inner collection chute 201 flow uniformly therethrough toward the outlet 206, since the inner collection chute 201 is axially symmetrical, and are then discharged together from the outlet 206 into the associated timing hopper 215. When this timing hopper 215 is opened, the articles therefrom are delivered through the discharge chute 216 (Fig. 17) and its outlet 218 into the associated nozzle of the packaging machine.

In a weighing cycle in which the outer gates of the weighing hoppers 20 are opened, articles are discharged into the clearances 212 of the outer collection chutes 202 and flow down the flat panels 214 of those outer collection chutes, being guided smoothly down the aforedescribed valleys defined by adjacent panels 214, and pass via the outlets 209 into the associated respective timing hoppers 215. The articles are then released from those timing hoppers 215 into the discharge chute 217. Since the respective delivery paths from these two timing hoppers 215 to the common outlet 219 are different, as can be seen from Fig. 17, the timing hopper 215 supplying the longer delivery path (right-hand side in Fig. 17) is controlled to open at an earlier time than the timing hopper 215 supplying the shorter delivery path (left-hand side in Fig. 17). The articles supplied respectively from the two outer collection chutes 202 into the discharge chute 217 can thus be made to arrive at the outlet 219 at the same time, for discharge therefrom into the nozzle of the packaging machine in which they are to be packaged.

As seen from above the inner and outer collection chutes 201 and 202, the articles flowing therethrough will follow substantially straight delivery paths to the timing hoppers 215.

The present invention is not limited to the illustrated embodiment. In alternative embodiments the delivery paths in the inner and outer collection chutes may be constrained by valley-shaped portions differing in cross-section from the sharply angled valleys of the illustrated embodiment but still serving to prevent articles from flowing in roundabout paths. The two outer collection chutes may be spaced from the inner collection chute by any appropriate distance.

A number of combinatorial weighing apparatuses may be employed in a packaging center or the like, in an enclosed building where, for example, foods are processed. When all of the combinatorial weighing apparatuses are operated at the same time, much noise is produced by the vibration of the combinatorial weighing apparatus and this noise may have a high-frequency component due to repeated impingement of the articles on panels of the apparatus and resonating vibration of these panels. The combined noise level may be almost intolerably high in such a building. At times, accurate measurements and communications may be hindered by such a high noise level.

The higher the speed of delivery of the articles through the apparatus, the larger the noise produced thereby. The noise may become larger if the collection chutes are improved for higher speed of flow of the articles through the apparatus.

One approach to solve the noise problem is to line or coat the surfaces of the pool hoppers 8 hit by the articles discharged radially outwardly from the radial troughs 6, and also the surfaces of the gates of the weighing hoppers 10 that are hit by the articles when discharged obliquely downwardly from the pool hoppers 8, with urethane layers or urethane sheets for cushioning the articles to attenuate the noise produced thereby.

However, such sound-insulating materials are not always adequately effective. To prevent the lining or coating layers from being peeled off when the weighing apparatus is cleaned or operated very frequently, the lining or coating layers should be of a considerable thickness, such that they would be practically unacceptable in recent weighing apparatuses which are required to be compact and complex in their internal structure. In addition, the cost of attaching the lining or coating layers to the complex structural members would in some cases be prohibitively high.

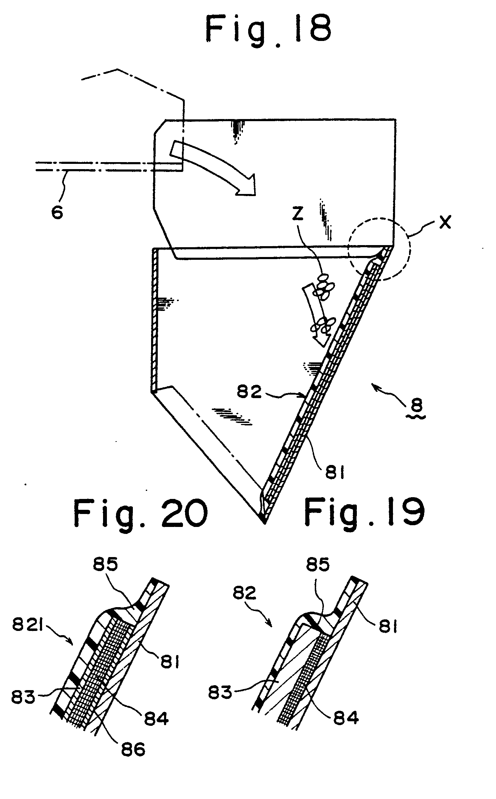

Figs. 18 and 19 illustrate a sound-insulating structure as used in an automatic combinatorial weighing apparatus embodying the present invention. The sound-insulating structure can be employed on any wall surface upon which articles will impinge violently, for example in the pool hoppers 8 (Fig. 21), the inner collection chute 201 (Fig. 1), the outer collection chutes 202, and the timing hoppers 215 (Fig. 14). In Fig. 18 the sound-insulating structure is shown incorporated in a pool hopper 8. As shown in Fig. 18, relatively hard articles Z such as candies or beans drop from the radial trough 6 into the pool hopper 8 along a parabolic path. The articles Z falling off the radial trough 6 would impinge upon an outer panel 81 of the pool hopper 8 and produce noise due to vibration of the outer panel 81. In this embodiment, however, a vibration damper 82 is attached to the inner surface of the outer panel 81.

The vibration damper 82, which is commercially available, comprises a base 83 (Fig. 19) and a viscoelastic member 84 applied as a tape to the base 83 and made of a macromolecular material capable of converting vibratory energy into thermal energy. The viscoelastic tape 84 is applied by an adhesive to the panel 81, with the base 83 positioned inwardly away from the panel 81. The vibration damper 82 and the panel 81 are then lined with a urethane coating 85 so as to be covered therewith.

The urethane coating 85 extends sufficiently to cover the edges of the base 83 so that the base 83 will be prevented at its edges from being peeled off by being hit by solid articles. The thus damped panel 81 serves as a vibration-restricting plate.

Many panels employed in the combinatorial weighing apparatus concerned are made of stainless steel, and their outer surfaces should preferably be shiny and flat from the design standpoint. Since the vibration damper 82 is mounted on the inner surface of the panel 81, the outer surface thereof remains flat and shiny as it is free from surface irregularities, poor appearance, and colour differences which would otherwise result from a urethane coating on the outer panel surface.

The vibration damper 82 prevents articles Z from directly hitting the inner surface of the panel 81. The articles Z instead hit the urethane coating 85 and then drop to the bottom of the pool hopper 8. This causes the base 83 to vibrate and the vibratory energy produced in the base 83 is converted by the viscoelastic tape 84 into thermal energy. Resonant vibration of the plate 81 is thus inhibited, so that the pool hopper 8 can be operated relatively quietly.

Even if articles Z are directed to hit an edge of the base 83, the urethane coating 85 protects that edge against wear and serves to cushion the articles Z, which are therefore protected from damage.

Such a vibration damper may be attached to the inner surface of each of the gates of the weighing hoppers 10 (Fig. 21) upon which articles from the pool hoppers 8 tend to impinge, or to each of the inner surfaces of the collection chutes against which articles are directed from the weighing hoppers 10, or to the inner surface of each of the radial troughs 6 against which articles from the distributing table 4 are discharged.

It is possible to attach such a vibration damper to the outer surface of the panel 81 for the purpose of attenuating noise, and also to any surface on which articles are likely to roll and slide. It is not necessary to apply a urethane coating to such a vibration damper, on the outer panel surface, that is not exposed to direct external view.

Fig. 20 shows a vibration damper in another embodiment of the present invention. This vibration damper, generally designated at 821, is assembled as a unit comprising a base 83 in the form of a commercially available vibration damping steel sheet, a vibration-restricting plate 86, and a viscoelastic tape 84 interposed therebetween. The vibration damper unit 821 is applied by an adhesive to the inner surface of the panel 81, and the vibration damper unit 821 and the panel 81 are covered with a urethane coating 85. The vibration damper 821 confers the same advantages as the vibration damper 82 shown in Figs. 18 and 19.

Although certain preferred embodiments have been shown and described, it should be understood that many changes and modifications may be made therein without departing from the scope of the appended claims.

## Claims

1. An automatic combinatorial weighing apparatus, for measuring out successive batches of articles, having a collection chute assembly (200), disposed below an array of weighing hoppers, for receiving articles from those hoppers, which assembly comprises a first collection chute (201), which narrows in cross-section in the downward direction to an outlet (206) thereof, disposed between two outer collection chutes (202) having respective outlets (209) at lower ends thereof, which outer chutes are together substantially symmetrical about two mutually perpendicular planes that intersect in a central axis of the assembly; the apparatus being such that articles are discharged from selected weighing hoppers into just the said first collection chute in one weighing cycle, into just the outer collection chutes in the next weighing cycle, and so on alternately in successive cycles;

characterised in that the said first collection chute is substantially axially symmetrical; and in that a first timing hopper (215) is disposed at the outlet (206) of the said first collection chute, for receiving articles therefrom, and in that two further timing hoppers (215) are disposed respectively at the outlets (209) of the two outer collection chutes, for receiving articles respectively from those chutes; there being a first discharge chute (216) having an inlet arranged for receiving articles from the first timing hopper, and a second discharge chute (217) having first and second inlet portions arranged for receiving articles respectively from the two further timing hoppers and having wall portions defining first and second discharge paths which differ in length from one another and lead respectively from the said first and second inlet portions to a common outlet (219) of the second discharge chute; and the said two further timing hoppers being individually controllable to discharge the quantities of articles collected respectively therein into the second discharge chute at different respective times such that those quantities arrive at the said common outlet substantially simultaneously with one another.

2. Apparatus as claimed in claim 1, wherein each of the collection chutes (201, 202) is made up of a plurality of flat panels (214) joined together so that adjacent panels are inclined to one another.

3. Apparatus as claimed in claim 1 or 2, wherein each of the discharge chutes (216, 217) is made up of a plurality of flat panels joined together so that adjacent panels are inclined to one another.

4. Apparatus as claimed in claim 1, 2 or 3, wherein each of the collection chutes (201, 202) comprises a plurality of chute parts (203, 204, 205, 207, 208) constituting respective vertically successive portions of the chute concerned.

5. Apparatus as claimed in any preceding claim, including a vibration damper (82) arranged for restricting vibrations of a wall portion of the apparatus over which articles pass when the apparatus is in use.

6. Apparatus as claimed in claim 5, including a coating (85) covering an outer surface and edges of the said vibration damper.

7. Apparatus as claimed in claim 6, wherein the said coating is a urethane coating.

8. Apparatus as claimed claim 5, 6 or 7, wherein the said vibration damper is mounted on a flat surface of the said wall portion.

9. Apparatus as claimed in claim 5, 6, 7 or 8, wherein the location of the said wall portion is such that articles passing through the apparatus impinge on the said vibration damper.

## Patentansprüche

1. Automatische kombinatorische Wägevorrichtung zum Ausmessen aufeinanderfolgender Artikelchargen, mit einer unterhalb einer Anordnung von Wägebehältern angeordneten Sammelrutschenvorrichtung (200) zum Aufnehmen von Artikeln aus diesen Behältern, die eine erste Sammelrutsche (201) umfaßt, deren Querschnitt nach unten zu einem Auslaß (206) der Rutsche hin abnimmt, und die zwischen zwei äußeren Sammelrutschen (202) mit jeweiligen Auslässen (209) an ihren unteren Enden angeordnet ist, wobei die äußeren Sammelrutschen zusammen im wesentlichen symmetrisch um zwei zueinander senkrechte Ebenen angeordnet sind, die sich in der Mittelachse der Rutschenvorrichtung schneiden; wobei die Vorrichtung derart ausgebildet ist, daß Artikel aus ausgewählten Wägebehältern bei einem Wägezyklus nur in die erste Sammelrutsche, beim nächsten Wägezyklus nur in die äußeren Sammelrutschen ausgegeben werden, und so weiter abwechselnd in den folgenden Zyklen;

dadurch gekennzeichnet, daß die erste Sammelrutsche im wesentlichen axialsymmetrisch ist; und daß ein erster Timing-Behälter (215) an dem Auslaß (206) der ersten Sammelrutsche derart angeordnet ist, daß er aus diesen Artikel aufnimmt, und daß zwei weitere Timing-Behälter (215) jeweils an den Auslässen (209) der beiden äußeren Sammelrutschen so angeordnet sind, daß sie jeweils aus diesen Artikel aufnehmen; wobei eine erste Ausgaberutsche (216) mit einem zum Aufnehmen von Artikeln aus dem ersten Timing-Behälter angeordneten Einlaß, und eine zweite Ausgaberutsche (217) mit ersten und zweiten Einlaßbereichen, die zur jeweiligen Aufnahme von Artikeln aus den beiden weiteren Timing-Behältern angeordnet sind und mit Wandbereichen, welche erste und zweite Ausgabewege bilden, die sich voneinander in der Länge unterscheiden und jeweils von den ersten und zweiten Einlaßbereichen zu einem gemeinsamen Auslaß (219) der zweiten Ausgaberutsche führen, vorgesehen sind; und wobei die beiden weiteren Timing-Behälter individuell zum Ausgeben der jeweils in ihnen gesammelten Artikelmengen in die zweite Ausgaberutsche zu verschiedenen jeweiligen Zeiten steuerbar sind, so daß diese Mengen an dem gemeinsamen Auslaß im wesentlichen gleichzeitig ankommen.

2. Vorrichtung nach Anspruch 1, bei der jede der Sammelrutschen (201, 202) aus mehreren ebenen Tafeln (214) besteht, die derart miteinander verbunden sind, daß benachbarte Tafeln zueinander geneigt sind.

3. Vorrichtung nach Anspruch 1 oder 2, bei der jede der Ausgaberutschen (216, 217) aus mehreren ebenen Tafeln besteht, die derart miteinander verbunden sind, daß benachbarte Tafeln zueinander geneigt sind.

4. Vorrichtung nach Anspruch 1,2 oder 3, bei der jede der Sammelrutschen (201, 202) mehrere Rutschenteile (203, 204, 205, 207, 208) umfaßt, welche jeweilige vertikal aufeinanderfolgende Teile der betreffenden Rutsche bilden.

5. Vorrichtung nach einem der vorhergehenden Ansprüche, mit einem Vibrationsdämpfer (82) zum Begrenzen der Vibrationen eines Wandbereiches der Vorrichtung über den bei Betrieb der Vorrichtung Artikel gehen.

6. Vorrichtung nach Anspruch 5, mit einer Beschichtung (85), die die Außenfläche und die Kanten des Vibrationsdämpfers bedeckt.

7. Vorrichtung nach Anspruch 6, bei der die Beschichtung eine Urethan-Beschichtung ist.

8. Vorrichtung nach Anspruch 5, 6 oder 7, bei der der Vibrationsdämpfer an einer ebenen Fläche des genannten Wandbereiches angebracht ist.

9. Vorrichtung nach Anspruch 5, 6, 7 oder 8, bei der der genannte Wandbereich an einer derartigen Stelle angeordnet ist, daß durch die Vorrichtung gehende Artikel auf dem Vibrationsdämpfer auftreffen.

**Revendications**

1. Dispositif automatique combinatoire de pesage, pour mesurer des lots successifs d'articles, comportant un ensemble de goulottes de collecte (200), disposées au-dessous d'un réseau de trémies de pesage, pour recevoir des articles sortant de ces trémies, lequel ensemble comprend une première goulotte de collecte (201), dont la section transversale se rétrécit dans la direction descendante jusqu'à la sortie (206), disposée entre deux goulottes extérieures de collecte (202) ayant leurs sorties respectives (209) à leurs extrémités inférieures, lesquelles goulottes extérieures sont sensiblement symétriques par rapport à deux plans mutuellement perpendiculaires qui se coupent selon un axe central de l'ensemble; le dispositif étant tel que des articles soient sortis de trémies de pesage sélectionnées uniquement dans ladite première goulotte de collecte dans un premier cycle de pesage, uniquement dans les goulottes extérieures de collecte dans le cycle de pesage suivant, et ainsi de suite en alternance au cours des cycles successifs, caractérisé par le fait que ladite première goulotte de collecte possède sensiblement une symétrie axiale; et par le fait qu'une première trémie minuterie (215) est montée à la sortie (206) de ladite première goulotte de collecte, pour recevoir des articles qui en sortent, et par le fait que deux autres trémies minuteries (215) sont respectivement disposées aux sorties (209) des deux goulottes de collecte extérieures, pour recevoir respectivement des articles sortant de ces goulottes; une première goulotte de sortie (216) étant installée avec son entrée agencée pour recevoir des articles venant de la première trémie minuterie, et une seconde goulotte de sortie (217) ayant une première et une seconde parties d'entrée agencées pour recevoir des articles venant respectivement des deux autres trémies minuteries et comportant des parties de cloison définissant un premier et un second trajets de sortie dont les longueurs sont différentes et qui conduisent respectivement desdites première et seconde parties d'entrée jusqu'à une sortie commune (219) de la seconde goulotte de décharge; et les deux dites autres trémies minuteries étant individuellement contrôlables pour décharger les quantités d'articles respectivement collectés à l'intérieur dans la seconde goulotte de sortie à des instants respectifs différents de manière que ces quantités arrivent à ladite sortie commune sensiblement en même temps.

2. Dispositif selon la revendication 1, dans lequel chaque goulotte de collecte (201, 202) est construite à partir d'un ensemble de panneaux plats (214) assemblés entre eux de manière que des panneaux adjacents soient inclinés l'un par rapport à l'autre.

3. Dispositif selon l'une des revendications 1 ou 2, dans lequel chacune des goulottes de sortie (216, 217) est construite à partir d'un ensemble de panneaux plats assemblés de manière que des panneaux adjacents soient inclinés l'un par rapport à l'autre.

4. Dispositif selon l'une des revendications 1, 2 ou 3, dans lequel chacune des goulottes de collecte (201, 202) comprend un ensemble de parties de goulottes (203, 204, 205, 207, 208) constituant des parties successives verticales correspondantes de la goulotte concernée.

5. Dispositif selon l'une quelconque des revendications précédentes, comprenant un amortisseur de vibrations (82) agencé pour limiter les vibrations d'une partie de cloison de l'appareil sur laquelle les articles passent quand le dispositif est en service.

6. Dispositif selon la revendication 5, comprenant un revêtement (25) recouvrant une surface extérieure et les arêtes dudit amortisseur de vibrations.

7. Dispositif selon la revendication 6, dans lequel ledit revêtement est un revêtement d'uréthane.

8. Dispositif selon l'une quelconque des revendications 5, 6 ou 7, dans lequel ledit amortisseur de vibrations est monté sur une surface plane de ladite partie de cloison.

9. Dispositif selon l'une quelconque des revendications 5, 6, 7 ou 8, dans lequel l'emplacement de ladite partie de cloison est tel que des articles traversant le dispositif viennent frapper contre ledit amortisseur de vibrations.

# Fig. 1

# Fig.2

# Fig. 3

207

214

# Fig. 4

208

209

214

# Fig. 5

204

214

213

# Fig. 6

203

214

Fig. 7

214

207

Fig. 8

214

208

209

Fig. 9

203   214

Fig. 10

204

214

205

206

# Fig.11

# Fig.12

# Fig.13

# Fig. 14

207    201    203

←— 200

202

204

208

205

209          206
215

215

# Fig. 15

207

208

215

# Fig.16

216
218
209
209
219    217    206

# Fig.17

From outer collection chute    From inner collection chute    From outer collection chute

217    216

219    218

# Fig. 18

# Fig. 20  Fig. 19

# Fig. 21

EP 0 182 584 B1

# Fig. 22